# EUROPEAN PATENT APPLICATION

(11) **EP 4 513 076 A1**
(43) Date of publication of application: **26.02.2025**
(21) Application number: 23822601.3
(22) Date of filing: 04.01.2023
(51) Int. Cl.: F16M 13/02, F16M 11/04

(54) **CONNECTING MEMBER, CONNECTING ASSEMBLY, AND HANGING APPARATUS AND ASSEMBLING METHOD THEREFOR**

(30) Priority: 15.06.2022 CN 202210681679
(71) Applicant: ZTE Corporation, Shenzhen, Guangdong 518057 (CN)
(72) Inventor: WU, Shenyi, Shenzhen, Guangdong 518057 (CN); JIANG, Yu, Shenzhen, Guangdong 518057 (CN); ZHANG, Gongzhe, Shenzhen, Guangdong 518057 (CN)
(74) Representative: Canzler & Bergmeier Patentanwälte Partnerschaft mbB
(86) International application number: PCT/CN2023/070505
(87) International publication number: WO 2023/241029

(57) **Abstract**

A connecting member (1). The connecting member (1) comprises: a connecting body (13); a first connecting end (11) connected to the connecting body (13) and symmetrical about a center line in a first direction A; and a second connecting end (12) connected to the end of the connecting body (13) facing away from the first connecting end (11), the side of the second connecting end (12) in a second direction B perpendicular to the first direction A being provided with a limiting portion (122). When adjacent connecting members (1) are connected, the first connecting end (11) of one of the connecting members (1) is mated with the second connecting end (12) of the other connecting member (1), the limiting portion (122) of the connecting member (1) on one side is hung at the first connecting end (11) of the other connecting member (1), the second connecting end (12) of one of the connecting members (1) is mated with the first connecting end (11) of the connecting member (1) on the other side, and the limiting portion (122) of one of the connecting members (1) carries the first connecting end (11) of the connecting member (1) on the other side. Further disclosed is a connecting assembly, comprising a plurality of connecting members (1) connected to one another. Further disclosed is a hanging apparatus, comprising the connecting assembly, a pole assembly (2), and a plurality of device mounting members (3). Further disclosed is an assembling method for the hanging apparatus. Adjacent connecting members can be connected without the need of adapters, unlimited expansion can be achieved, and material waste is reduced.

## Description

### CROSS REFERENCE TO RELATED APPLICATIONS

The present disclosure claims the priority to Chinese Patent Application No. CN202210681679.X entitled "CONNECTING MEMBER, CONNECTING ASSEMBLY, AND HANGING APPARATUS AND ASSEMBLING METHOD THEREOF" and filed on June 15, 2022, the contents of which are incorporated herein by reference in their entirety.

### TECHNICAL FIELD

The present disclosure relates to the technical field of communications, and in particular, to a connecting member, a connecting assembly, a hanging apparatus and a method of assembling the hanging apparatus.

### BACKGROUND

At present, communication devices generally deployed in the market are mostly installed with the manner of "pole installation" in which the communication devices are connected to holding poles through fixing devices. Due to the rapid development of communication technology, the update frequency of communication devices is also accelerating. In many sites, there is a need to configure or set multiple types of devices with different models or from different manufacturers at the same time.

### SUMMARY

The present disclosure provides a connecting member, a connecting assembly, and a hanging apparatus and an assembling method thereof.

In a first aspect of the present disclosure, there is provided a connecting member, including: a connecting body; a first connecting end which is connected to an end of the connecting body and is symmetrical with respect to a center line oriented in a first direction; and a second connecting end which is connected to an end of the connecting body away from the first connecting end, wherein a side of the second connecting end in a second direction is provided with a limiting portion, and wherein the first direction is perpendicular to the second direction; wherein when adjacent said connecting members are connected to each other, the first connecting end of one connecting member of the adjacent connecting members is matched with the second connecting end of another connecting member on one side of said one connecting member, the limiting portion of said another connecting member is hung on the first connecting end of said one connecting member, the second connecting end of said one connecting member is matched with the first connecting end of yet another connecting member on the other side of said one connecting member, and the limiting portion of said yet another connecting member supports the first connecting end of said one connecting member.

In a second aspect of the present disclosure, there is provided a connecting assembly, including a plurality of connecting members described in the first aspect, wherein the first connecting ends of the connecting members are connected to the respective second connecting ends of their adjacent connecting members.

In a third aspect of the present disclosure, there is provided a hanging apparatus, including: the connecting assembly described in the second aspect; a holding-pole assembly, which is connected to a connecting member located in a middle and is configured to fix a holding pole; and a plurality of equipment installation members, with one of the equipment installation members mounted on a side of the connecting member located in the middle away from the holding-pole assembly, the remaining equipment installation members respectively connected to two sides of the remaining connecting members, and the equipment installation members used for installation of communication devices.

In a fourth aspect of the present disclosure, there is provided a method of assembling a hanging apparatus, including: providing n connecting members; fixing an i^{th} connecting member, with a limiting portion of the fixed connecting member at a bottom of a second connecting end of the fixed connecting member; arranging a limiting portion of an (i+1)^{th} connecting member at a bottom of a second connecting end of the (i+1)^{th} connecting member, and inserting a first connecting end of the (i+1)^{th} connecting member downwards into the second connecting end of the i^{th} connecting member; and arranging a limiting portion of an (i+2)^{th} connecting member at a top of a second connecting end of the (i+2)^{th} connecting member, and inserting the second connecting end of the (i+2)^{th} connecting member downwards into the first connecting end of the i^{th} connecting member, thus forming a connecting assembly; wherein n ≥ 3, n is a positive integer, 1 ≤ i ≤ n , and i is a positive integer.

### BRIEF DESCRIPTION OF DRAWINGS

The drawings herein are incorporated to the specification and constitute a part of the specification. The drawings illustrate the embodiments of the present disclosure, and are used for explaining, together with the specification, the principle of the present disclosure.

In order to explain the technical solutions in the embodiments of the present disclosure or the technical solutions in the existing technology more clearly, drawings for the description of the embodiments or the existing technology will be briefly described below. Apparently, other drawings can be derived by those of ordinary skill in the art from the drawings described herein without any creative work.
FIG. 1 is a schematic structural diagram of a connecting member according to a first embodiment of the present disclosure;
FIG. 2 is a schematic structural diagram of the connecting member according to the first embodiment of the present disclosure before and after being turned 180 degrees;
FIG. 3 is an exploded view of the connecting member, an equipment installation member, and a holding-pole assembly according to the first embodiment of the present disclosure;
FIG. 4 is a schematic structural diagram of the connecting member, the equipment installation member, and the holding-pole assembly according to the first embodiment of the present disclosure after being assembled;
FIG. 5 is a schematic structural diagram of the connecting member, the equipment installation member, and the holding-pole assembly according to the first embodiment of the present disclosure while being assembled;
FIG. 6 is a schematic structural diagram of a hanging apparatus according to the first embodiment of the present disclosure after being mounted to a holding pole;
FIG. 7 is a schematic structural diagram of the hanging apparatus according to the first embodiment of the present disclosure after mounted with communication devices;
FIG. 8 is a schematic structural diagram of a connecting member according to a second embodiment of the present disclosure;
FIG. 9 is a schematic structural diagram of the connecting member, an equipment installation member, and a holding-pole assembly according to the second embodiment of the present disclosure after being assembled;
FIG. 10 is a schematic structural diagram of a hanging apparatus according to the second embodiment of the present disclosure after being mounted to a holding pole;
FIG. 11 is a schematic structural diagram of the hanging apparatus according to the second embodiment of the present disclosure after mounted with communication devices; and
FIG. 12 is a flowchart illustrating a method of assembling a hanging apparatus according to the second embodiment of the present disclosure.

Reference numerals are explained as follows:
1 - connecting member; 11 - first connecting end; 111 - plug-in block; 112 - first sheet-metal member; 12 - second connecting end; 121 - plug-in slot; 122 - limiting portion; 123 - second sheet-metal member; 13 - connecting body; 2 - holding-pole assembly; 21 - first holding-pole member; 22 - second holding-pole member; 23 - adjustment member; 3 - equipment installation member; 4 - communication device; 5 - holding pole; A - first direction; B - second direction.

### DETAIL DESCRIPTION OF EMBODIMENTS

In order to make the objectives, technical solutions and advantages of the embodiments the present disclosure clearer, the technical solutions in the embodiments of the present disclosure will be clearly and thoroughly described below with reference to the drawings of the embodiments of the present disclosure. Apparently, the embodiments described herein are only a part, but not all of the embodiments of the present disclosure. All other embodiments derived by those of ordinary skill in the art from the embodiments described herein without any inventive work belong to the scope of the present disclosure.

Due to the rapid development of communication technology, the update frequency of communication devices is also accelerating, and in many sites, there is a need to configure or set, at the same time, multiple types of communication devices with different models or from different manufacturers.

In order to deal with the above problems, solutions have been proposed in the industry to hang multiple devices by a single pole fixing device. The common installation forms by the pole fixing device include one-holding-two installation and one-holding-three installation, and most of the installed devices have a relatively light weight, such as Remote Radio Units (RRUs), batteries, and power supplies. In this way, the shortage of holding pole resources in the market can be alleviated to a certain extent. Therefore, the design of a one-holding-multiple fixing device becomes a key for solving the problems.

At present, solutions of the one-holding-multiple fixing device in the industry are generally divided into two kinds. One kind is to directly hang a plurality of devices by a rectangular profile bracket. This kind of solutions has the problems that installation processes are not flexible, the construction progress may be influenced because the brackets need to be delivered separately after engineering investigation, and there is material waste. The other kind is to splice and expand universal fixing devices to hang a plurality of devices. The universal fixing devices adopted in this kind of solutions can be delivered together with the whole equipment and can be flexibly combined on a project site to adapt to installations in various scenarios. However, the existing expandable universal fixing devices merely support one-holding-three installation at most, but cannot realize further hanging expansion; and for scenarios desiring one- holding-multiple (more than three) installation, additional adapters are required to realize connection between two devices for infinitely expanding a hanging function, which also causes the problem of material waste.

### First Embodiment

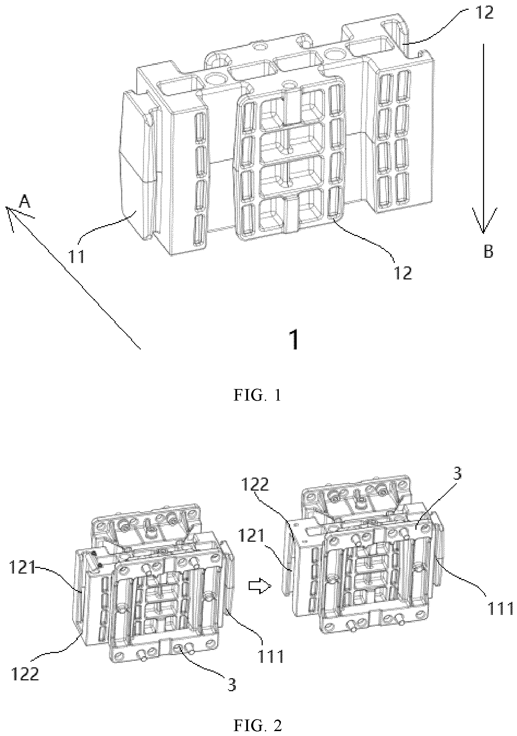

As shown in FIG. 1 to FIG. 7, in a first aspect of the present disclosure, there is provided a connecting member 1, including: a connecting body 13; a first connecting end 11 connected to an end of the connecting body 13 and being symmetrical with respect to a center line oriented in a first direction A; and a second connecting end 12 connected to an end of the connecting body 13 away from the first connecting end 11, wherein a side of the second connecting end 12 in a second direction B is provided with a limiting portion 122, and the first direction A is perpendicular to the second direction B. When adjacent said connecting members 1 are connected to each other, the first connecting end 11 of one connecting member 1 of the adjacent connecting members 1 is matched with the second connecting end 12 of another connecting member 1 on one side of said one connecting member 1, with the limiting portion 122 of said another connecting member 1 being hung on the first connecting end 11 of said one connecting member 1; the second connecting end 12 of said one connecting member 1 is matched with the first connecting end 11 of yet another connecting member 1 on the other side of said one connecting member 1, with the limiting portion 122 of said yet another connecting member 1 supporting the first connecting end 11 of said one connecting member 1.

The connecting member 1 according to the present disclosure includes the first connecting end 11 and the second connecting end 12. the first connecting end 11 has a configuration that is symmetric on opposite sides with respect to a center line oriented in the first direction A, and the second connecting end 12 is provided with a limiting portion 122 on a side in the second direction B. Referring to FIG. 1 and FIG. 2, it should be understood that the limiting portion 122 is located on a side in the second direction B so when the connecting member 1 is in a first state shown in FIG. 2, the limiting portion 122 is located on a lower side in the second direction B; and when the connecting member 1 is in a second state shown in FIG. 2, the limiting portion 122 is located on an upper side in the second direction B. When the first connecting end 11 of one connecting member 1 is to be matched with the second connecting end 12 of another connecting member 1, said another connecting member 1 is turned over to locate the limiting portion 122 thereof on the upper side, and the second connecting end 12 of said another connecting member 1 is inserted downwards into the first connecting end 11, thus hanging the limiting portion 122 by the top of the first connecting end 11. When the second connecting end 12 of one connecting member 1 is to be matched with the first connecting end 11 of another connecting member 1, said connecting member 1 is translated with the limiting portion 122 thereof on the lower side, then the first connecting end 11 of said another connecting member 1 is inserted downwards into the second connecting end 12, thus making the limiting portion 122 support the bottom of the first connecting end 11. In this way, the connecting member 1 can be infinitely expanded through adjacent connecting members 1 without the need for being connected through adapters, thereby solving the problem of material waste.

Still referring to FIG. 1 and FIG. 2, the first connecting end 11 is a plug-in block 111, the second connecting end 12 is a plug-in slot 121, the limiting portion 122 is provided on a side of the plug-in slot 121 with respect to a center line oriented in the second direction B, and the plug-in block 111 is adapted to be plugged within the plug-in slot 121. When two adjacent connecting members 1 are connected to each other, if the plug-in block 111 of one connecting member 1 is fixed, the plug-in slot 121 of the other connecting member 1 needs to be turned over to make the limiting portion 122 thereof face upwards, and then the plug-in slot 121 is hung from top to bottom onto the plug-in block 111 under the action of gravity of the plug-in slot 121 itself; and if the plug-in slot 121 of said one connecting member 1 is fixed, the plug-in slot 121 (of the other connecting member 1) needs to be turned over to make the limiting portion 122 of the plug-in slot 121 face downwards, then the plug-in block 111 is mounted from top to bottom into the limiting portion 122 of the plug-in slot 121 under the action of gravity of the plug-in block 111 itself. In this way, the assembly of the connecting members 1 can be infinitely expanded through the fitting of the plug-in slots 121 and the plug-in blocks 111.

An end of the connecting body 13 extends along a direction away from the connecting body 13 to form the plug-in block 111, and an end of the connecting body 13 away from the plug-in block 111 is recessed towards the interior of the connecting body 13 to form the plug-in slot 121, and the limiting portion 122 is provided at any end face of the plug-in slot 121. The plug-in block 111 may have a T-shaped section, the plug-in slot 121 may have a C-shaped section, and the T-shaped block is symmetrical with respect to the center line oriented in the first direction A, so that the T-shaped block can fit and be mounted to the C-shaped groove no matter how the T-shaped block is turned, thus realizing the assembly of adjacent connecting members 1 without any adapter.

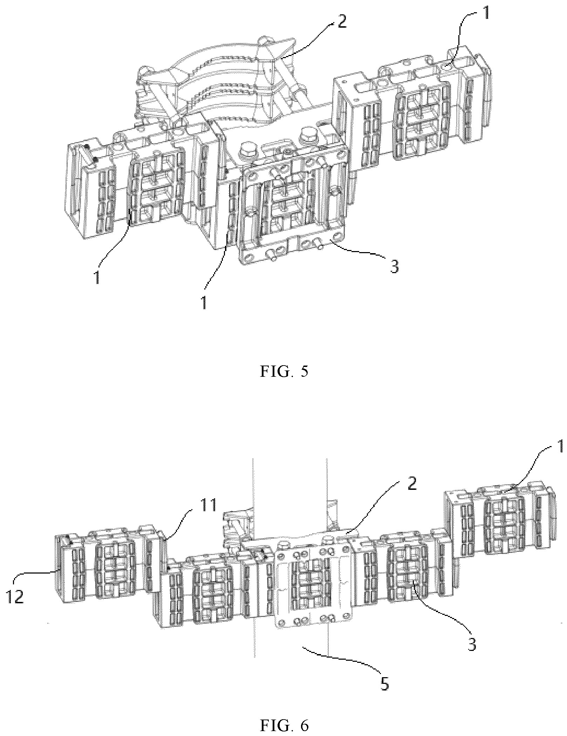

Referring to FIG. 5, this embodiment further provides a connecting assembly, including a plurality of connecting members 1 provided in the first aspect, with the first connecting ends 11 of the connecting members 1 connected to the respective second connecting ends 12 of their adjacent connecting members 1. Since a first connecting end 11 is matched with a second connecting end 12 in adjacent connecting members, infinite expansion of the connecting assembly can be realized, and the connecting assembly could hang a plurality of communication devices 4 while being easy to assemble and disassemble.

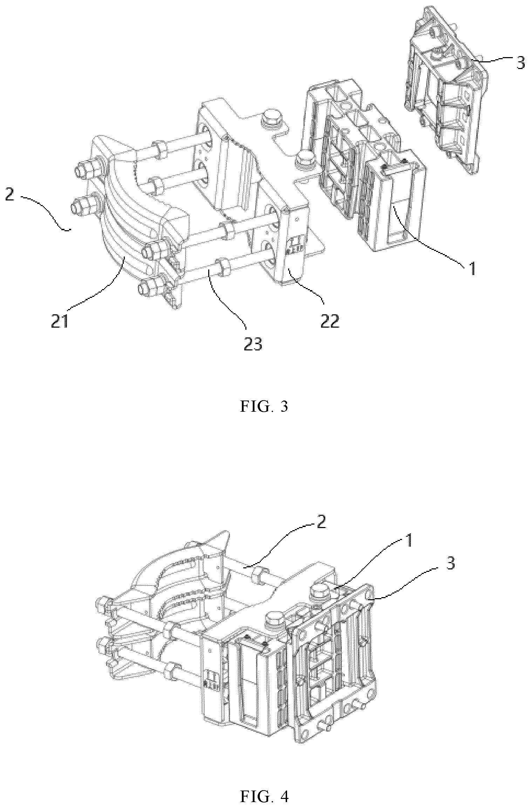

Referring to FIG. 4 to FIG. 7, the first embodiment further provides a hanging apparatus. The hanging apparatus includes: the above-mentioned connecting assembly; a holding-pole assembly 2 connected to a side of a middle connecting member 1 among the plurality of connecting members 1 (i.e., the connecting member 1 located in the middle of the plurality of connecting members 1), the holding-pole assembly 2 being configured for fixing a holding pole 5; and a plurality of equipment installation members 3 adapted for installation of communication devices, wherein one of the equipment installation members 3 is mounted on a side of the middle connecting member 1 away from the holding-pole assembly 2, and the remaining equipment installation members 3 are connected to two sides of the remaining connecting members 1, respectively. In this way, the equipment installation members 3 can be mounted on opposite sides of each connecting member 1 in the first direction A, so that the loads on opposite sides of each connecting member 1 are uniform, and more communication devices 4 can be simultaneously mounted to a same connecting member 1.

The holding-pole assembly 2 may include: a first holding-pole member 21 including a first cambered surface fitting a portion of the holding pole 5; a second holding-pole member 22 provided apart from the first holding-pole member 21 and including a second cambered surface fitting another portion of the holding pole 5; and an adjustment member 23 connected to both of the first holding-pole member 21 and the second holding-pole member 22, and is capable of adjusting a distance between the first holding-pole member 21 and the second holding-pole member 22.

The first cambered surface and the second cambered surface are placed opposite to each other and respectively hold the holding pole 5. After adjusting relative distance between the two cambered surfaces by the adjustment member 23, the first cambered surface and the second cambered surface are fixed. The adjustment member 23 includes threaded rods and bolts or nuts, and at least two threaded rods are provided. The at least two threaded rods penetrate through the first cambered surface and the second cambered surface, and are fixed with the bolts or nuts.

In addition, the equipment installation member 3 is mounted to a side of the connecting member 1 with at least one screw, and a side of the equipment installation member away from the connecting member 1 is used for installation of the communication device 4, and the communication device 4 includes an RRU, a battery, a power supply, etc.

### Second Embodiment

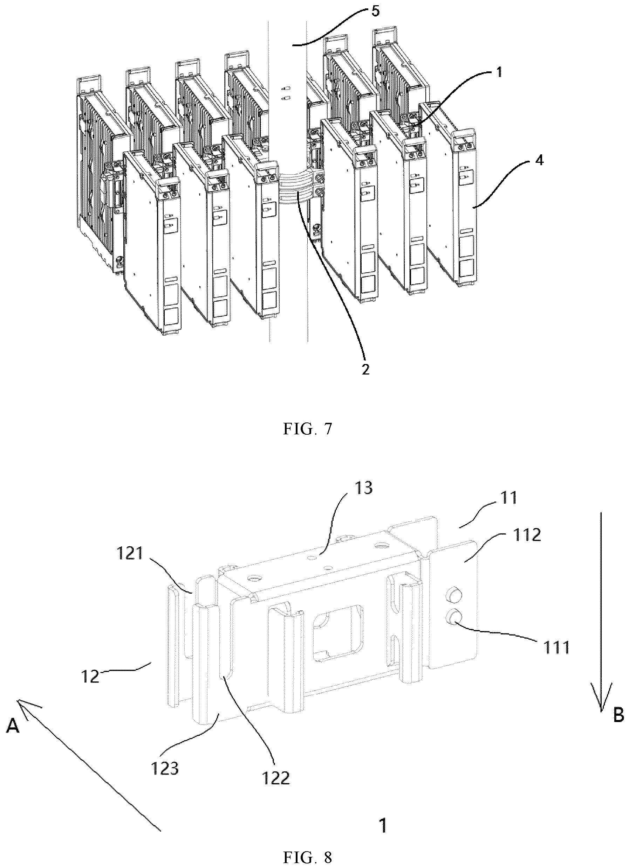

As shown in FIG. 8, the second embodiment is substantially the same as the first embodiment, and differs from the first embodiment in that: an end of the connecting body 13 extends along a direction away from the connecting body 13 to form a first sheet-metal member 112, the first sheet-metal member 112 extends inwards to form the plug-in block 111, an end of the connecting body 13 away from the plug-in block 111 extends along a direction away from the connecting body 13 to form a second sheet-metal member 123, the second sheet-metal member 123 forms the plug-in slot 121 along the second direction B, and the limiting portion 122 is provided at the bottom of the plug-in slot 121. The number of the first sheet-metal member 112 and the number of the second sheet-metal member 123 are both two. The two first sheet-metal members 112 are provided opposite to and apart from each other, the two second sheet-metal members 123 are provided opposite to and apart from each other, and the distance between inner sides of the two second sheet-metal members 123 is the same as the distance between outer sides of the two first sheet-metal members 112. In this way, a first connecting end 11 can be firmly connected to an adjacent second connecting end 12 after the first connecting end 11 and the adjacent second connecting end 12 are fit together.

Each plug-in slot 121 has a U-shaped section, and each plug-in block 111 has a circular section. The circular plug-in blocks 111 are symmetrical with respect to a center line thereof oriented in the first direction A, and are capable of fitting and being mounted to the U-shaped plug-in slots no matter how the connecting member 1 is turned, so that the assembly of adjacent connecting members 1 can be realized without any adapter. Furthermore, two circular plug-in blocks 111 may be provided and symmetrically arranged, so that the U-shaped plug-in slot 121 may be hung onto the upper circular plug-in block 111 from above, or the lower circular plug-in block 111 may be limited at the bottom of the U-shaped plug-in slot 121 from above.

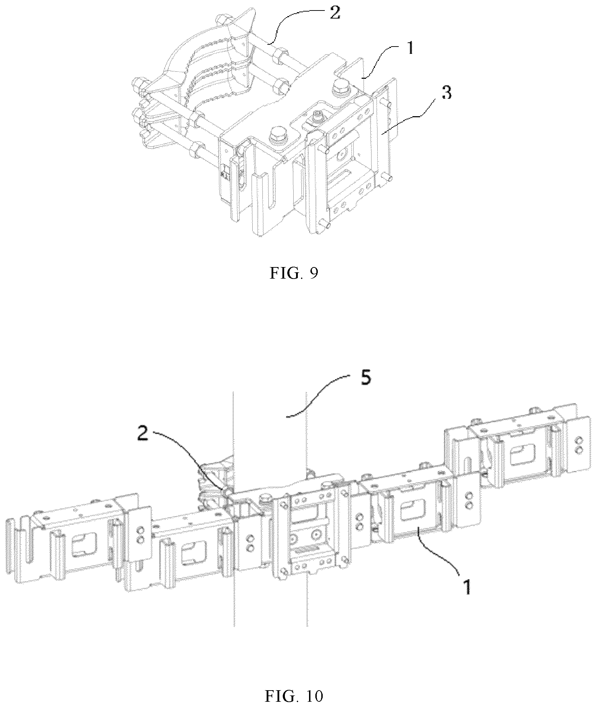

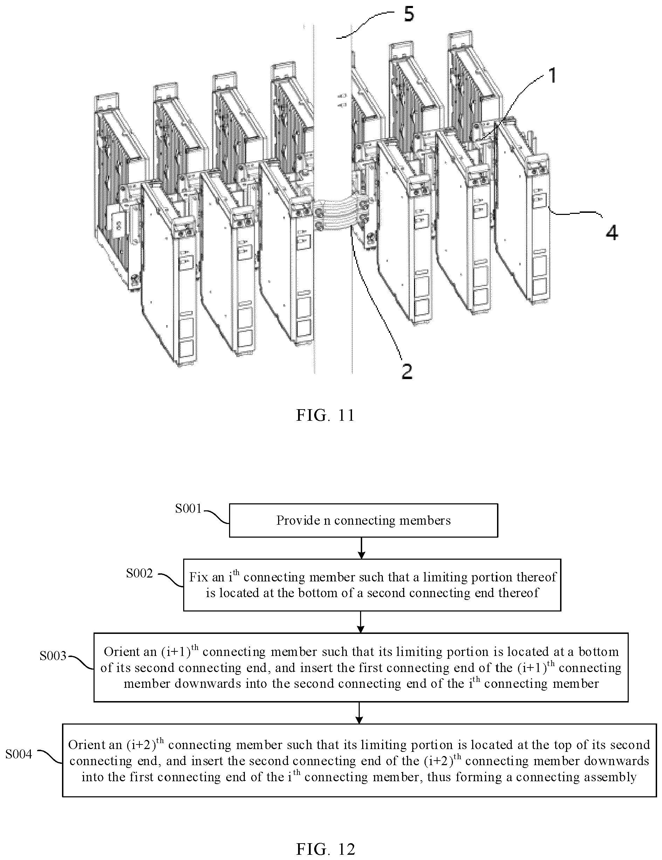

As shown in FIG. 10 and FIG. 11, this embodiment further provides a connecting assembly including a plurality of said connecting members 1. The first connecting ends 11 of the connecting members 1 are connected to the respective second connecting ends 12 of their adjacent connecting members 1. Since a first connecting end 11 of a connecting assembly is matched with a second connecting end 12 in adjacent connecting members, infinite expansion of the connecting assembly can be realized, and the connecting assembly could hang of a plurality of communication devices 4 while being easy to assemble and disassemble.

Referring to FIG. 9 to FIG. 11, this embodiment further provides a hanging apparatus. The hanging apparatus includes: the above-mentioned connecting assembly; a plurality of equipment installation members 3 each connected to a side of a respective connecting member 1 and used for installation of a communication device 4; and a holding-pole assembly 2 connected to a side, away from the equipment installation member 3, of a middle connecting member 1 among the plurality of connecting members 1, and the holding-pole assembly 2 configured to fix a holding pole 5.

### Third Embodiment

As shown in FIG. 12, an embodiment of the present disclosure provides a method of assembling a hanging apparatus. The method includes the following operations: operation S001, providing n connecting members 1; operation S002, fixing an i^{th} connecting member 1 such that a limiting portion 122 of the fixed connecting member 1 is located at the bottom of a second connecting end 12 of the fixed connecting member 1; operation S003, orienting an (i+1)^{th} connecting member 1 such that a limiting portion 122 of the (i+1)^{th} connecting member 1 is located at the bottom of a second connecting end 12 of the (i+1)^{th} connecting member 1, and inserting a first connecting end 11 of the (i+1)^{th} connecting member 1 downwards into the second connecting end 12 of the i^{th} connecting member 1; and operation S004, orienting an (i+2)^{th} connecting member 1 such that a limiting portion 122 of the (i+2)^{th} connecting member 1 is located at the top of a second connecting end 12 of the (i+2)^{th} connecting member 1, and inserting the second connecting end 12 of the (i+2)^{th} connecting member 1 downwards into the first connecting end 11 of the i^{th} connecting member 1, thus forming a connecting assembly; wherein n ≥ 3, n is a positive integer, 1 ≤ i ≤ n, and i is a positive integer. Here, the purpose of defining n as a positive integer greater than or equal to 3 is to fully explain the expansion in the left and right directions at operations S003 and S004. In fact, the expansion of the connecting members 1 can be realized as long as n is a positive integer greater than or equal to 2.

The operation of fixing the i^{th} connecting member 1 includes: mounting an equipment installation member 3 to a side of the connecting member 1; and mounting a holding-pole assembly 2 to a side of the connecting member 1 away from the equipment installation member 3, and fixing the connecting member 1 to a holding pole 5 with the pole holding assembly 2.

At the operation of mounting the holding-pole assembly 2 to the side of the connecting member 1 away from the equipment installation member 3 and fixing the connecting member 1 to the holding pole 5 with the pole holding assembly 2, a first cambered surface of a first holding-pole member 21 is attached to a side of the holding pole 5, a second cambered surface of a second holding-pole member 22 is attached to an opposite side of the holding pole 5, the first holding-pole member 21 and the second holding-pole member 22 are fastened on the holding pole 5 with the adjustment member 23. Then, the side of the connecting member 1 is mounted to the first holding-pole member 21 or the second holding-pole member 22, and then other connecting members 1 are mounted to the first connecting end 11 and the second connecting end 12 of the connecting member 1. In this way, the expansion of the connecting members 1 can be performed without any other adapter. Besides, the equipment installation member 3 is mounted to the side of the connecting member 1 away from the holding pole 5, thus allowing for installation of a plurality of communication devices 4.

According to the connecting member, the connecting assembly, the hanging apparatus, and the method of assembling the hanging apparatus provided by the present disclosure, the connecting member includes a first connecting end and a second connecting end, the first connecting end has a configuration that is symmetric on opposite sides with respect to a center line oriented in the first direction, the second connecting end is provided with a limiting portion on a side in the second direction, and the first direction and the second direction are perpendicular to each other; when the first connecting end of one connecting member is to be matched with the second connecting end of another connecting member, said another connecting member is turned over to locate the limiting portion thereof on the upper side, and the second connecting end of said another connecting member is inserted downwards into the first connecting end, thus hanging the limiting portion by the top of the first connecting end; and when the second connecting end of one connecting member is to be matched with the first connecting end of another connecting member, said another connecting member is translated with the limiting portion thereof on the lower side, then the first connecting end of said another connecting member is inserted downwards into the second connecting end, thus making the limiting portion support the bottom of the first connecting end. In this way, the connecting member can be infinitely expanded through adjacent connecting members without the need for being connected through adapters, thereby solving the problem of material waste.

It should be noted that the terms such as "first" and "second" herein are merely used to distinguish one entity or action from another entity or action, but do not necessarily require or imply that such relationship or order actually exists between the entities or actions. Moreover, the terms "includes", "comprises" or any other variation thereof are intended to indicate a non-exclusive inclusion, so that a process, method, article, or device, which includes a series of elements, does not only include those listed elements but also include other elements which are not explicitly listed, or the elements inherent in such process, method, article, or device. If there are no more limitations, limiting an element by "including a..." does not exclude the existence of other identical elements in the process, method, article, or device which includes the element.

What is described above is merely the specific implementations of the present disclosure, and those specific implementations of the present disclosure are described for enabling those of ordinary skill in the art to understand or implement the present disclosure. Various modifications to these embodiments are apparent to those of ordinary skill in the art, and the general principle defined herein may be realized in other embodiments without departing from the spirit or scope of the present disclosure. Thus, the present disclosure is not limited to the embodiments described herein, but falls in the widest scope consistent with the principle and novel features disclosed herein.

## Claims

1. A connecting member, comprising:
a connecting body;
a first connecting end which is connected to an end of the connecting body and is symmetrical with respect to a center line oriented in a first direction; and
a second connecting end which is connected to an end of the connecting body away from the first connecting end, wherein a side of the second connecting end in a second direction is provided with a limiting portion, and wherein the first direction is perpendicular to the second direction;
in a case where adjacent said connecting members are connected to each other, the first connecting end of one connecting member of the adjacent connecting members is matched with the second connecting end of another connecting member on one side of said one connecting member, the limiting portion of said another connecting member is hung on the first connecting end of said one connecting member, the second connecting end of said one connecting member is matched with the first connecting end of yet another connecting member on the other side of said one connecting member, and the limiting portion of said yet another connecting member supports the first connecting end of said one connecting member.

2. The connecting member of claim 1, wherein the first connecting end is a plug-in block, the second connecting end is a plug-in slot, the limiting portion is provided on a side of a center line of the plug-in slot oriented in the second direction, and the plug-in block is adapted to be plugged within the plug-in slot.

3. The connecting member of claim 2, wherein an end of the connecting body extends along a direction away from the connecting body to form the plug-in block, and an end of the connecting body away from the plug-in block is recessed towards an interior of the connecting body to form the plug-in slot, and wherein the limiting portion is provided at any end face of the plug-in slot.

4. The connecting member of claim 3, wherein the plug-in block has a T-shaped section, and the plug-in slot has a C-shaped section.

5. The connecting member of claim 2, wherein an end of the connecting body extends along a direction away from the connecting body to form a first sheet-metal member, the first sheet-metal member extends inwards to form the plug-in block, an end of the connecting body away from the plug-in block extends along a direction away from the connecting body to form a second sheet-metal member, the second sheet-metal member forms the plug-in slot along the second direction, and the limiting portion is provided at a bottom of the plug-in slot.

6. The connecting member of claim 5, wherein the plug-in slot has a U-shaped section, and the plug-in block has a circular section.

7. A connecting assembly, comprising a plurality of connecting members of any one of claims 1 to 6, wherein the first connecting ends of the connecting members are connected to the respective second connecting ends of their adjacent connecting members.

8. A hanging apparatus, comprising:
the connecting assembly of claim 7;
a holding-pole assembly which is connected to a middle connecting member among the plurality of connecting members and is configured for fixing a holding pole; and
a plurality of equipment installation members, wherein one of the equipment installation members is mounted on a side of the middle connecting member away from the holding-pole assembly, and the remaining equipment installation members are connected to two sides of the remaining connecting members, respectively, and wherein the equipment installation members are adapted for installation of communication devices.

9. The hanging apparatus of claim 8, wherein the holding-pole assembly comprises:
a first holding-pole member, which comprises a first cambered surface fitting a portion of the holding pole;
a second holding-pole member, which is provided apart from the first holding-pole member and comprises a second cambered surface fitting another portion of the holding pole; and
an adjustment member, which is connected to both of the first holding-pole member and the second holding-pole member, and is adapted to adjust a distance between the first holding-pole member and the second holding-pole member.

10. A method of assembling a hanging apparatus, comprising:
providing n connecting members;
fixing an i^{th} connecting member such that a limiting portion of the fixed connecting member is located at a bottom of a second connecting end of the fixed connecting member;
orienting an (i+1)^{th} connecting member such that a limiting portion of the (i+1)^{th} connecting member is located at a bottom of a second connecting end of the (i+1)^{th} connecting member, and inserting a first connecting end of the (i+1)^{th} connecting member downwards into the second connecting end of the i^{th} connecting member; and
orienting an (i+2)^{th} connecting member such that a limiting portion of the (i+2)^{th} connecting member is located at a top of a second connecting end of the (i+2)^{th} connecting member, and inserting the second connecting end of the (i+2)^{th} connecting member downwards into the first connecting end of the i^{th} connecting member, thus forming a connecting assembly;
wherein n ≥ 3, n is a positive integer, 1 ≤ i ≤ n, and i is a positive integer.

11. The method of claim 10, wherein fixing the i^{th} connecting member comprises:
mounting an equipment installation member to a side of the connecting member; and
mounting a holding-pole assembly to a side of the connecting member away from the equipment installation member, and fixing the connecting member to a holding pole with the holding-pole assembly.
